# EUROPEAN PATENT APPLICATION

(11) **EP 4 837 882 A1**
(43) Date of publication of application: **11.11.2026**
(21) Application number: 24931552.4
(22) Date of filing: 03.12.2024
(51) Int. Cl.: C01B 32/05, B01D 53/62, B01D 53/81, B01J 20/20, B01J 20/30, C01B 32/50

(54) **POROUS CARBON PRODUCTION METHOD AND CARBON DIOXIDE SEPARATION METHOD**

(30) Priority: 27.03.2024 JP 2024052379
(71) Applicant: Kabushiki Kaisha Kobe Seiko Sho (Kobe Steel, Ltd.), Kobe-shi, Hyogo 651-8585 (JP)
(72) Inventor: HAMAGUCHI, Maki, Takasago-shi, Hyogo 676-8670 (JP); SHISHIDO, Takahiro, Takasago-shi, Hyogo 676-8670 (JP); ITO, Takahiro, Amagasaki-shi, Hyogo 660-0095 (JP); MATOBA, Naoki, Amagasaki-shi, Hyogo 660-0095 (JP); TSUKAZAKI, Takaki, Amagasaki-shi, Hyogo 660-0095 (JP)
(74) Representative: Müller-Boré & Partner Patentanwälte PartG mbB
(86) International application number: PCT/JP2024/042771
(87) International publication number: WO 2025/203885

(57) **Abstract**

The present disclosure provides a method for producing porous carbon that enables easily and inexpensively producing porous carbon containing a large number of ultramicropores . A method for producing porous carbon according to an aspect of the present disclosure includes: a first pulverization step of pulverizing a graphitizable carbon material; an infusibilization step of infusibilizing the graphitizable carbon material pulverized in the first pulverization step; and a solid-phase carbonization step of subjecting, to solid-phase carbonization, the graphitizable carbon material infusibilized in the infusibilization step.

## Description

### [TECHNICAL FIELD]

The present disclosure relates to a method for producing porous carbon and a method for separating carbon dioxide.

### [BACKGROUND ART]

In recent years, carbon dioxide has been considered to have a significant influence on global warming. As an effective measure against this global warming problem, technologies for separating carbon dioxide have been attracting attention.

Porous carbon having a large number of pores has attracted attention as a material for separating gases such as carbon dioxide. This porous carbon is also referred to as carbon molecular sieve and can separate not only carbon dioxide but also gases other than carbon dioxide in accordance with the sizes of the pores.

### [PRIOR ART DOCUMENT]

### [PATENT DOCUMENT]

Patent Document 1: Japanese Unexamined Patent Application, Publication No. 2016-41656

### [SUMMARY OF THE INVENTION]

### [PROBLEMS TO BE SOLVED BY THE INVENTION]

As porous carbon capable of separating carbon dioxide, porous carbon containing a large number of ultramicropores having a pore diameter of less than or equal to 0.7 nm is considered useful.

Patent Document 1 discloses, as a method for producing porous carbon, a method in which a mixture obtained by mixing a polyamic acid resin with an oxide is carbonized, the oxide is then removed to produce amorphous porous carbon, and the amorphous porous carbon is heat-treated at a temperature greater than or equal to the crystallization temperature to obtain porous carbon. However, such a method using a non-graphitizable carbon material tends to increase the production cost of porous carbon because the production process is complicated.

On the other hand, as a method for producing porous carbon, a method may be considered in which a carbon source such as coal or plants is carbonized and steam-activated. However, this method has problems such as difficulty in controlling pores, high activation cost, and low yield.

The present disclosure has been made in view of the foregoing circumstances, and an object thereof is to provide a method for producing porous carbon that enables easily and inexpensively producing porous carbon containing a large number of ultramicropores.

### [MEANS FOR SOLVING THE PROBLEMS]

A method for producing porous carbon according to one aspect of the present disclosure includes: a first pulverization step of pulverizing a graphitizable carbon material; an infusibilization step of infusibilizing the graphitizable carbon material pulverized in the first pulverization step; and a solid-phase carbonization step of subjecting, to solid-phase carbonization, the graphitizable carbon material infusibilized in the infusibilization step.

### [EFFECTS OF THE INVENTION]

The method for producing porous carbon according to one aspect of the present disclosure enables easily and inexpensively producing porous carbon containing a large number of ultramicropores .

### [BRIEF DESCRIPTION OF THE DRAWINGS]

FIG. 1 is a flowchart showing a method for producing porous carbon according to an embodiment of the present disclosure.
FIG. 2 is a flowchart showing a method for separating carbon dioxide using the method for producing porous carbon in FIG. 1.
FIG. 3 is a flowchart showing a method for producing porous carbon according to an embodiment different from that in FIG. 1.
FIG. 4 is a flowchart showing a method for separating carbon dioxide using the method for producing porous carbon in FIG. 3.
FIG. 5 is a graph showing a cumulative curve of a particle diameter distribution of petroleum pitch of No. 1 after the first pulverization step.
FIG. 6 is a graph showing the relation between the treatment time period of the porous carbon and the amount of carbon dioxide adsorbed in No. 1.
FIG. 7 is a graph showing a heat generation process due to adsorption of carbon dioxide in the porous carbon of No. 1.
FIG. 8 is a schematic cross-sectional view estimated for the porous carbon of No. 1.
FIG. 9 is a graph showing the relation between the particle diameter of the porous carbon of No. 1 and the proportion of an inner layer.
FIG. 10 is a graph showing the relation between the treatment time period of the porous carbon and the amount of carbon dioxide adsorbed in No. 2.
FIG. 11 is a graph showing a heat generation process due to adsorption of carbon dioxide in the porous carbon of No. 2.
FIG. 12 is a graph showing the relation between the treatment time period of the porous carbon and the amount of carbon dioxide adsorbed in No. 5.

### [DESCRIPTION OF EMBODIMENTS]

### Description of Embodiments of the Present Disclosure

Firstly, embodiments of the present disclosure will be listed and described.
(1) A method for producing porous carbon according to one aspect of the present disclosure includes: a first pulverization step of pulverizing a graphitizable carbon material; an infusibilization step of infusibilizing the graphitizable carbon material pulverized in the first pulverization step; and a solid-phase carbonization step of subjecting, to solid-phase carbonization, the graphitizable carbon material infusibilized in the infusibilization step.
   Since the graphitizable carbon material is used in the method for producing porous carbon, the porous carbon can be produced at low cost as compared with a conventional method using a non-graphitizable carbon material. Furthermore, by subjecting the graphitizable carbon material pulverized in the first pulverization step to the infusibilization step and the solid-phase carbonization step, the method for producing porous carbon enables ultramicropores to be spontaneously formed in the resulting porous carbon. Accordingly, the method for producing porous carbon enables easily and inexpensively producing porous carbon containing a large number of ultramicropores.
(2) In the above (1), the method preferably further includes a second pulverization step of pulverizing the graphitizable carbon material after the infusibilization step. This configuration enables easily producing porous carbon having ultramicropores.
(3) In the above (2), the second pulverization step is preferably performed prior to the solid-phase carbonization step. This configuration facilitates increasing the gas adsorption capacity, the adsorption rate, and the like of the resulting porous carbon.
(4) In any one of the above (1) to (3), an average particle diameter of the graphitizable carbon material in the solid-phase carbonization step is preferably less than or equal to 20 µm. This configuration facilitates further increasing the gas adsorption capacity, the adsorption rate, and the like of the resulting porous carbon.
(5) In any one of the above (1) to (3), in the first pulverization step, the graphitizable carbon material is preferably pulverized to have an average particle diameter of less than or equal to 20 µm.This configuration enables increasing the gas adsorption capacity, the adsorption rate, and the like of the resulting porous carbon.
(6) In any one of the above (1) to (5), in a 100% carbon dioxide atmosphere at 30 °C and 100 kPa, an amount of carbon dioxide adsorbed by the porous carbon is preferably greater than or equal to 4 parts by mass with respect to 100 parts by mass of the porous carbon. According to the method for producing porous carbon, the amount of carbon dioxide adsorbed can be made greater than or equal to the lower limit.
(7) In any one of the above (1) to (6), the porous carbon may be a carbon dioxide separating material. The porous carbon is suitable as a carbon dioxide separating material.
(8) A method for separating carbon dioxide according to another aspect of the present disclosure includes a step of bringing a gas containing carbon dioxide into contact with porous carbon produced by the method for producing porous carbon according to any one of the above (1) to (6).
   According to the method for separating carbon dioxide, carbon dioxide can be separated easily and inexpensively.
(9) In the above (8), the gas is preferably a combustion exhaust gas generated when a material containing carbon is combusted. In recent years, as a measure against global warming, it has been desired to efficiently separate carbon dioxide from a combustion exhaust gas generated by the use of fossil fuel and the like. In this respect, the method for separating carbon dioxide enables efficient separation of carbon dioxide and can effectively function as a measure against global warming.

It is to be noted that in the present disclosure, the term "graphitizable carbon material" means a group of organic compound raw materials for producing carbon that becomes graphitized when subjected to heat treatment at a high temperature of greater than or equal to 2,500 °C under normal pressure. The "graphitizable carbon material" preferably has a property of undergoing liquid-phase carbonization. Furthermore, the term "non-graphitizable carbon material" means a group of organic compound raw materials for producing carbon that maintains a random structure and does not become graphitized even when subjected to heat treatment at 2,500 °C under normal pressure.

The "pulverizing" in the first pulverization step refers to pulverizing the graphitizable carbon material to an average particle diameter of less than or equal to 150 µm. Furthermore, the "average particle diameter" of the graphitizable carbon material means a 50% value (50% particle diameter, D50) of a volume-based cumulative particle size distribution curve measured by laser diffraction.

The "infusibilizing" means treatment for preventing the graphitizable carbon material from melting in the solid-phase carbonization step. The term "solid-phase carbonization" means carbonization without softening (melting).

### Details of Embodiments of the Present Disclosure

Hereinafter, the embodiments of the present disclosure will be described in detail with reference to the drawings as appropriate. It is to be noted that with regard to numerical values disclosed in this specification, it is possible to adopt only one of an upper limit value and a lower limit value as referred to herein, or to arbitrarily combine an upper limit value and a lower limit value. In the present specification, all combinable numerical ranges are regarded as being described as suitable ranges. In the present disclosure, the terms "first" and "second" are used to distinguish components assigned with them and do not limit the number, order, priority, or the like.

### First Embodiment

### Method for Producing Porous Carbon

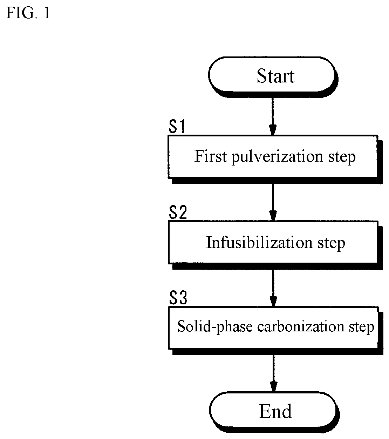

As shown in FIG. 1, the method for producing porous carbon includes: a first pulverization step S1 of pulverizing a graphitizable carbon material; a step (infusibilization step S2) of infusibilizing the graphitizable carbon material pulverized in the first pulverization step S1; and a step (solid-phase carbonization step S3) of subjecting, to solid-phase carbonization, the graphitizable carbon material infusibilized in the infusibilization step S2.

Since the graphitizable carbon material is used in the method for producing porous carbon, porous carbon can be produced at low cost as compared with a conventional method using a non-graphitizable carbon material. Furthermore, by subjecting the graphitizable carbon material pulverized in the first pulverization step S1 to the infusibilization step S2 and the solid-phase carbonization step S3, the method for producing porous carbon enables ultramicropores to be spontaneously formed in the resulting porous carbon. Accordingly, the method for producing porous carbon enables easily and inexpensively producing porous carbon containing a large number of ultramicropores. It is to be noted that the term "ultramicropores" means pores having pore diameters of less than or equal to 0.7 nm.

### Graphitizable Carbon Material

Examples of the graphitizable carbon material include pitches, ashless coal, and the like. Examples of the pitches include coal-tar pitch and petroleum pitch. These raw materials may be used alone, or two or more thereof may be used in combination.

Pitches are preferred as the graphitizable carbon material. Pitches are graphitizable as they are used as binders for producing metallurgical coke and as raw materials for producing graphite. Since having a large number of ultramicropores of uniform sizes, porous carbon can appropriately separate gas molecules on the basis of the sizes thereof. In light of this, unlike other coals or plants, pitches include no inhomogeneous structure in their microstructures and are thus advantageous in forming ultramicropores of uniform size. Furthermore, since pitches are relatively inexpensive, the production cost of porous carbon can be reduced.

Furthermore, ashless coal is also preferred as the graphitizable carbon material. Ashless coal is graphitizable in that it becomes a softened and molten liquid state at around 300 °C and undergoes a liquid-phase carbonization reaction. Since ashless coal is obtained by extraction from coal at less than or equal to 400 °C, it contains a large amount of heteroatoms such as oxygen and therefore tends to provide a large specific surface area per unit volume. Furthermore, since ashless coal has not only a high heteroatom content but also a large molecular weight, the yield in the solid-phase carbonization step S3 can be easily improved.

It is to be noted that in the present disclosure, the term "ashless coal" (HyperCoal, HPC) means a type of modified coal obtained by modifying coal, namely modified coal obtained by removing ash and insoluble components from coal as much as possible using a solvent. Meanwhile, the ashless coal may contain ash within a range that does not lead to significant impairment in the fluidity or swelling property of the ashless coal. Generally, coal contains greater than or equal to 7% by mass and less than or equal to 20% by mass of ash, whereas ashless coal may contain approximately 2% by mass, and in some cases approximately 5% by mass, of ash. It is to be noted that the term "ash" means a value measured in accordance with JIS-M8812:2004.

### First pulverization step

In the first pulverization step S1, the graphitizable carbon material is pulverized to have an average particle diameter of less than or equal to 150 µm. In the first pulverization step S1, a plurality of the graphitizable carbon materials are mechanically pulverized.

In the first pulverization step S1, the graphitizable carbon material is preferably pulverized to have an average particle diameter of less than or equal to 20 µm. According to the findings of the present inventors, by pulverizing the graphitizable carbon material to an average particle diameter of less than or equal to 20 µm in the first pulverization step S1, the gas adsorption capacity of the resulting porous carbon tends to be increased. Furthermore, this configuration facilitates increasing the gas adsorption rate of the resulting porous carbon. Although the reason why the gas adsorption capacity and the gas adsorption rate of the porous carbon can be increased by pulverizing the graphitizable carbon material in the first pulverization step S1 is not clear, the following reasons can be presumed. The mechanism for making the graphitizable carbon material porous is not necessarily clear; however, traces left by the release of low-molecular-weight gases (CO, CO₂, CH₄, etc.) and/or water generated during the carbonization process are considered to contribute to the pore formation. Therefore, by pulverizing the material before the infusibilization step S2 and allowing the infusibilization to proceed to the center of the particles in the infusibilization step S2, oxygen serving as a source of such low-molecular-weight gases and the like can be uniformly supplied into the particles. It is considered that by promoting the release of such low-molecular-weight gases and the like in the solid-phase carbonization step S3, the porosity can be improved and accordingly the gas adsorption capacity and the gas adsorption rate of the porous carbon can be increased.

As a means for finely pulverizing the graphitizable carbon material in the first pulverization step S1, for example, cryogenic pulverization is preferred. The upper limit of the average particle diameter of the graphitizable carbon material pulverized in the first pulverization step S1 may be 15 µm, 10 µm, or 5 µm. It is to be noted that the lower limit of the average particle diameter of the graphitizable carbon material pulverized in the first pulverization step S1 is not particularly limited but in light of preventing an unnecessary increase in pulverization effort and/or in light of facilitating control of the particle diameter of the resulting porous carbon, may be 1 µm or 1.2 µm. It is to be noted that in the present disclosure, the term "adsorption amount" simply means an adsorption amount per unit volume.

### Infusibilization step

In the infusibilization step S2, melting of the graphitizable carbon material during the carbonization process is inhibited. By including the infusibilization step S2, the method for producing porous carbon enables producing porous carbon having desired ultramicropores.

In the infusibilization step S2, the graphitizable carbon material is infusibilized, for example, by heating in an atmosphere containing oxygen using a known heating furnace. A typical example of the atmosphere containing oxygen is an air atmosphere.

In the infusibilization step S2, the graphitizable carbon material is maintained within a predetermined temperature range. In light of achieving sufficient infusibilization and/or in light of preventing an infusibilization time period from becoming excessively long, the lower limit of the infusibilization treatment temperature in the infusibilization step S2 is preferably 150 °C and more preferably 180 °C. On the other hand, in light of preventing the graphitizable carbon material from melting before the infusibilization, the upper limit of the infusibilization treatment temperature is preferably 350 °C and more preferably 320 °C. Furthermore, the heating rate in the infusibilization step S2 may be, for example, greater than or equal to 0.01 °C/min and less than or equal to 10 °C/min.

In light of achieving sufficient infusibilization, the lower limit of the holding time period at the infusibilization treatment temperature in the infusibilization step S2 is preferably 10 minutes and more preferably 20 minutes. On the other hand, in light of increasing the production efficiency of the porous carbon, the upper limit of the holding time period is preferably 120 minutes and more preferably 90 minutes.

### Solid-phase carbonization step

In the solid-phase carbonization step S3, the graphitizable carbon material after the infusibilization step S2 is subjected to solid-phase carbonization by heat treatment. In other words, in the method for producing porous carbon, the graphitizable carbon material is not melted during the carbonization process. In the method for producing porous carbon, porous carbon is obtained through the solid-phase carbonization step S3. The solid-phase carbonization step S3 can be performed using, for example, a known heating unit.

The heating unit carbonizes the graphitizable carbon material by heating while substantially maintaining the aggregation state thereof. As the heating unit, for example, a known electric furnace may be used. In the solid-phase carbonization step S3, the graphitizable carbon material is subjected to solid-phase carbonization in such a manner that the graphitizable carbon material having low crystallinity is inserted into the heating unit, the interior of the heating unit is replaced with an inert gas, and then heating is performed while blowing the inert gas into the heating unit. The inert gas is not particularly limited and may be, for example, nitrogen or argon; of these, inexpensive nitrogen is preferred.

In the solid-phase carbonization step S3, the graphitizable carbon material is maintained within a predetermined temperature range. In light of sufficiently promoting the carbonization and the development of pores (ultramicropores), the lower limit of the solid-phase carbonization treatment temperature in the solid-phase carbonization step S3 is preferably 600 °C and more preferably 900 °C. On the other hand, in light of maintaining the porosity while inhibiting an unnecessary increase in production cost, the upper limit of the solid-phase carbonization treatment temperature is preferably 1,300 °C and more preferably 1,100 °C. Furthermore, the heating rate in the solid-phase carbonization step S3 may be, for example, greater than or equal to 0.01 °C/min and less than or equal to 10 °C/min.

In light of achieving sufficient solid-phase carbonization, the lower limit of the holding time period at the solid-phase carbonization treatment temperature in the solid-phase carbonization step S3 is preferably 10 minutes and more preferably 20 minutes. On the other hand, in light of increasing the production efficiency of the porous carbon, the upper limit of the holding time period is preferably 10 hours and more preferably 8 hours.

The upper limit of the average particle diameter of the graphitizable carbon material at the time of the solid-phase carbonization step S3 (at the start of the solid-phase carbonization step S3) is preferably 20 µm, more preferably 15 µm, and still more preferably 10 µm. In other words, the upper limit of the average particle diameter of the porous carbon obtained by the method for producing porous carbon is preferably 20 µm, more preferably 15 µm, and still more preferably 10 µm. According to the findings of the present inventors, when the average particle diameter of the resulting porous carbon is less than or equal to the upper limit, the gas adsorption capacity of the porous carbon can be increased. More specifically, the porous carbon can achieve a sufficiently high gas adsorption capacity while maintaining a high adsorption rate. It is to be noted that in light of preventing an unnecessary increase in pulverization effort, the lower limit of the average particle diameter of the graphitizable carbon material at the time of the solid-phase carbonization step S3 may be 1 µm or 1.2 µm.

### Other steps

The method for producing porous carbon only needs to include the first pulverization step S1, the infusibilization step S2, and the solid-phase carbonization step S3 and may omit other steps. In other words, the method for producing porous carbon does not need to include a conventional activation step and the like. However, the method for producing porous carbon is not intended to exclude the activation step. Furthermore, the method for producing porous carbon may include a forming step for improving the bulk density of the porous carbon or for facilitating the use of the porous carbon as a carbon molecular sieve. The activation step and the forming step will be described below in detail.

### Activation step

The activation step can be performed, for example, after the solid-phase carbonization step S3 or concurrently with the solid-phase carbonization step S3. The activation step can be performed by a known method, for example, by CO₂ activation, in which the surface of the graphitizable carbon material is partially gasified using an inert gas containing carbon dioxide (C + CO₂ → 2CO↑).

### Forming step

The forming step can be performed, for example, before the infusibilization step S2, between the infusibilization step S2 and the solid-phase carbonization step S3, or after the solid-phase carbonization step S3. In the forming step, pressure forming is performed such that the bulk density of the porous carbon after the solid-phase carbonization step S3 is increased. In the forming step, the porous carbon may be formed into pellets. By forming the porous carbon into pellets, for example, the packing density, gas-contact efficiency, handling properties, and the like of a formed body obtained in the forming step can be improved when the formed body is used as a gas separation material. Examples of a formation method in the forming step include known extrusion, a known pelletization process, and the like.

The forming step can be performed using a known forming machine. The size and shape of a cavity of a die used in the forming machine may be appropriately set in accordance with the intended use and the like of the porous carbon, and for example, in the case of forming the porous carbon into pellets, the pellets may each have a cylindrical shape with a diameter of greater than or equal to 1 mm and less than or equal to 3 mm and a length of greater than or equal to 3 mm and less than or equal to 10 mm. It is to be noted that in the forming step, a binder may be added to the porous carbon or the graphitizable carbon material to improve the formability of the porous carbon or the graphitizable carbon material.

In the case in which a binder is added in the formation, a known binder capable of inhibiting deterioration of the porosity of the porous carbon may be used as the binder, and examples thereof include pitches, resins, molasses, starches, and the like.

In the case in which a binder is added in the formation, in light of inhibiting insufficient formation, the lower limit of the amount of the binder added with respect to the resulting formed body is preferably 2% by mass and more preferably 4% by mass. On the other hand, in light of inhibiting an increase in production cost, the upper limit of the amount of the binder added is preferably 10% by mass and more preferably 8% by mass.

In the forming step, heat treatment may be performed to remove or stabilize the binder in the formed body. For example, in the case in which the forming step is performed after the solid-phase carbonization step S3, the heat treatment is preferably performed.

In light of the production cost, the forming step is preferably performed at room temperature (for example, 25 °C). Furthermore, in light of improving the formability, the forming step may be performed while heating.

In the forming step, it is preferable to form the formed body having voids of approximately greater than or equal to 2 µm so as not to impair the gas diffusion performance of the resulting formed body.

### Porous Carbon

The porous carbon produced by the method for producing porous carbon is configured, for example, as a gas separation material. For example, the porous carbon may be used to separate nitrogen from oxygen in air or to separate nitrogen from methane. Above all, the porous carbon is suitably used as a carbon dioxide separating material. The porous carbon produced by the method for producing porous carbon contains a large number of ultramicropores, and these ultramicropores have relatively uniform pore diameters; therefore, carbon dioxide can be easily separated from a gas containing carbon dioxide. It is to be noted that as described above, the porous carbon may be formed into a formed body through the forming step. Even in such a case, the performance of the formed body primarily attributed to a substrate thereof. Therefore, when the porous carbon contains a large number of ultramicropores, the gas adsorption capacity, the adsorption rate, and the like of the formed body can be easily increased.

In a 100% carbon dioxide atmosphere at 30 °C and 100 kPa, the amount of carbon dioxide adsorbed by the porous carbon with respect to 100 parts by mass of the porous carbon is preferably greater than or equal to 3 parts by mass, more preferably greater than or equal to 3.5 parts by mass, still more preferably greater than or equal to 4 parts by mass, and particularly preferably greater than or equal to 4.5 parts by mass. According to the method for producing porous carbon, the amount of carbon dioxide adsorbed can be made greater than or equal to the lower limit.

As described above, the porous carbon is suitably used as a gas separation material. It is known that in porous carbon containing an organic compound as a raw material, shrinkage of a carbon substrate occurs in a temperature region of greater than or equal to 700 °C, resulting in a decrease in pore diameter (Yuzo Sanada et. al, Activated Carbon: Fundamentals and Applications, Kodansha (1992)). The porous carbon described herein utilized this characteristic to control the pore diameter and consequently the gas separation performance according to the gas species. It is to be noted that the present disclosure is not intended to limit the application of the porous carbon to the gas separation material. For example, the porous carbon may also be used for an adsorbent for water treatment, an electronic component, an electrode material for an electric double layer capacitor, and the like.

### Method for Separating Carbon Dioxide

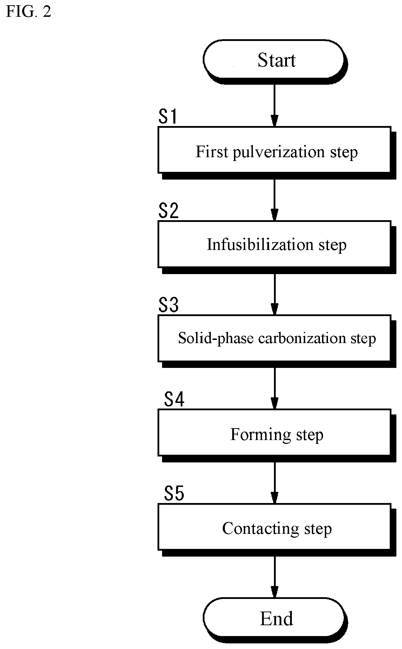

The porous carbon obtained by the method for producing porous carbon may be used in a gas separation method, particularly in a method for separating carbon dioxide. Furthermore, the method for producing porous carbon may constitute part of the gas separation method. In general, in the case in which porous carbon is used as a gas separation material, it is desirable that the porous carbon is superior in adsorption capacity, adsorption rate, and the like. In this respect, the porous carbon produced by the method for producing porous carbon is sufficiently pulverized in the first pulverization step S1 and produced through the infusibilization step S2 and the solid-phase carbonization step S3; as a result, the porous carbon contains a large number of ultramicropores and is superior in both adsorption capacity and adsorption rate. In particular, the method for producing porous carbon can suitably constitute part of a method for separating carbon dioxide. A method for separating carbon dioxide by using the porous carbon obtained by the method for producing porous carbon in FIG. 1 will be described below with reference to FIG. 2.

As shown in FIG. 2, the method for separating carbon dioxide includes a step (contacting step S5) of bringing a gas containing carbon dioxide into contact with the porous carbon produced by the method for producing porous carbon. Furthermore, the method for separating carbon dioxide includes a step (forming step S4) of forming the porous carbon produced by the method for producing porous carbon. It is to be noted that the porous carbon used in the method for separating carbon dioxide is obtained through a first pulverization step S1, an infusibilization step S2, and a solid-phase carbonization step S3. The first pulverization step S1, the infusibilization step S2, and the solid-phase carbonization step S3 are the same as the first pulverization step S1, the infusibilization step S2, and the solid-phase carbonization step S3 in FIG. 1. Moreover, the method for separating carbon dioxide may be obtained through the activation step described in the method for producing porous carbon in FIG. 1.

Since the porous carbon produced by the method for producing porous carbon is used in the method for separating carbon dioxide, carbon dioxide can be easily and inexpensively separated.

### Forming step

The forming step S4 may be performed, for example, before the infusibilization step S2, between the infusibilization step S2 and the solid-phase carbonization step S3, or after the solid-phase carbonization step S3. The forming step S4 may be performed by the same procedure as the forming step described in connection with the method for producing porous carbon.

### Contacting step

In the contacting step S5, a gas containing carbon dioxide is brought into contact with the formed body formed in the forming step S4. The concentration of carbon dioxide in the gas, the contact temperature between the gas and the porous carbon, and the like may be set on the basis of the operating environment of the method for separating carbon dioxide, the carbon dioxide adsorption efficiency, and/or the like.

The gas is not particularly limited as long as it contains carbon dioxide, and for example, may consist solely of carbon dioxide. Furthermore, the gas may be a combustion exhaust gas generated when a material containing carbon is combusted. In recent years, as a measure against global warming, it has been desired to efficiently separate carbon dioxide from a combustion exhaust gas generated by the use of fossil fuel and the like. In this respect, the method for separating carbon dioxide enables efficient separation of carbon dioxide and can effectively function as a measure against global warming.

### Second Embodiment

### Method for Producing Porous Carbon

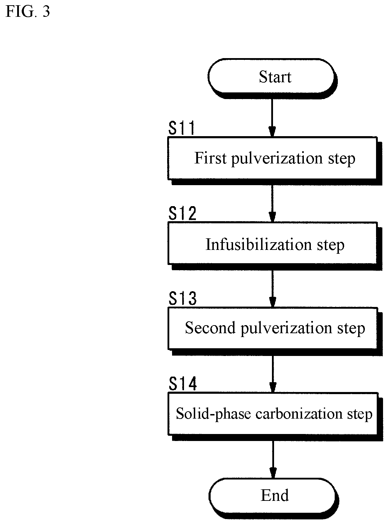

As shown in FIG. 3, the method for producing porous carbon includes: a first pulverization step S11 of pulverizing a graphitizable carbon material; a step (infusibilization step S12) of infusibilizing the graphitizable carbon material pulverized in the first pulverization step S11; and a step (solid-phase carbonization step S14) of subjecting, to solid-phase carbonization, the graphitizable carbon material infusibilized in the infusibilization step S12. The method for producing porous carbon further includes a second pulverization step S13 of pulverizing the graphitizable carbon material after the infusibilization step S12. The method for producing porous carbon may be performed by the same procedure as the method for producing porous carbon in FIG. 1, except that the second pulverization step S13 is included in addition to the first pulverization step S11 to pulverize the graphitizable carbon material.

Since the graphitizable carbon material is used in the method for producing porous carbon, the porous carbon can be produced at low cost as compared with a conventional method using a non-graphitizable carbon material. By performing the second pulverization step S13 after the infusibilization step S12, the method for producing porous carbon enables easily reducing the particle diameter of the graphitizable carbon material. Accordingly, the method for producing porous carbon enables more easily producing porous carbon containing a large number of ultramicropores.

The graphitizable carbon material used in the method for producing porous carbon may be the same as the graphitizable carbon material in the method for producing porous carbon in FIG. 1. The infusibilization step S12 of the method for producing porous carbon may be performed by the same procedure as the infusibilization step S2 of the method for producing porous carbon in FIG. 1. Furthermore, the solid-phase carbonization step S14 of the method for producing porous carbon may be performed by the same procedure as the solid-phase carbonization step S3 of the method for producing porous carbon in FIG. 1. Therefore, only the first pulverization step S11 and the second pulverization step S13 will be described below. It is to be noted that as in the case of the method for producing porous carbon in FIG. 1, the method for producing porous carbon may further include either or both of the activation step and the forming step as other step(s).

### First pulverization step

In the first pulverization step S11, the graphitizable carbon material is pulverized to have an average particle diameter of less than or equal to 150 µm. In the first pulverization step S11, a plurality of the graphitizable carbon materials are mechanically pulverized. In the first pulverization step S11, the graphitizable carbon material may be pulverized to have an average particle diameter of less than or equal to 20 µm. On the other hand, the average particle diameter of the graphitizable carbon material pulverized in the first pulverization step S11 may be greater than 20 µm. For example, the lower limit of the average particle diameter of the graphitizable carbon material pulverized in the first pulverization step S11 may be 50 µm or 100 µm. In the first pulverization step S11, as the particle diameter of the graphitizable carbon material is decreased, it is more likely that the graphitizable carbon material generates heat or that a plurality of the graphitizable carbon materials bond to each other. In this regard, by controlling the average particle diameter of the graphitizable carbon material within the above range in the first pulverization step S11, a large number of ultramicropores can be formed in the resulting porous carbon, while easily controlling the particle diameter of the graphitizable carbon material.

### Second pulverization step

In this embodiment, the second pulverization step S13 is performed between the infusibilization step S12 and the solid-phase carbonization step S14. In other words, in the method for producing porous carbon, the second pulverization step S13 is performed prior to the solid-phase carbonization step S14. This configuration enables easily increasing the gas adsorption capacity, the adsorption rate, and the like of the resulting porous carbon. Although the reason why the gas adsorption capacity, the adsorption rate, and the like of the porous carbon can be increased by performing the second pulverization step S13 between the infusibilization step S12 and the solid-phase carbonization step S14 is not clear, it is considered that pulverization prior to the solid-phase carbonization step S14 can promote release of low-molecular-weight gases and the like in the solid-phase carbonization step S14, thereby improving the porosity of the porous carbon and consequently increasing the gas adsorption capacity, adsorption rate, and the like of the porous carbon.

In the second pulverization step S13, a plurality of the graphitizable carbon materials are mechanically pulverized. In the second pulverization step S13, the graphitizable carbon material is preferably pulverized to have an average particle diameter of less than or equal to 20 µm. By pulverizing the graphitizable carbon material to an average particle diameter of less than or equal to 20 µm in the second pulverization step S13, the gas adsorption capacity, the adsorption rate, and the like of the resulting porous carbon can be easily increased. The upper limit of the average particle diameter of the graphitizable carbon material pulverized in the second pulverization step S13 may be 15 µm, 10 µm, or 5 µm. It is to be noted that the lower limit of the average particle diameter of the graphitizable carbon material pulverized in the second pulverization step S13 is not particularly limited but in light of preventing an unnecessary increase in pulverization effort and/or in light of facilitating control of the particle diameter of the resulting porous carbon, may be 1 µm or 1.2 µm.

### Method for Separating Carbon Dioxide

As in the case of the porous carbon obtained by the method for producing porous carbon in FIG. 1, the porous carbon obtained by the method for producing porous carbon may be used in a gas separation method, particularly in a method for separating carbon dioxide. Furthermore, as in the case of the method for producing porous carbon in FIG. 1, the method for producing porous carbon may constitute part of the gas separation method and can particularly suitably constitute part of a method for separating carbon dioxide.

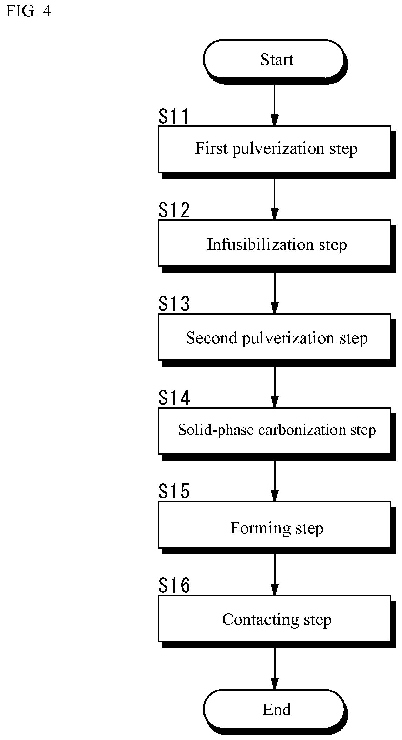

As shown in FIG. 4, the method for separating carbon dioxide includes a step (contacting step S16) of bringing a gas containing carbon dioxide into contact with the porous carbon produced by the method for producing porous carbon. Furthermore, the method for separating carbon dioxide includes a step (forming step S15) of forming the porous carbon produced by the method for producing porous carbon. It is to be noted that the porous carbon used in the method for separating carbon dioxide is obtained through the first pulverization step S11, the infusibilization step S12, the second pulverization step S13, and the solid-phase carbonization step S14. The first pulverization step S11, the infusibilization step S12, the second pulverization step S13, and the solid-phase carbonization step S14 are the same as the first pulverization step S11, the infusibilization step S12, the second pulverization step S13, and the solid-phase carbonization step S14 in FIG. 3. Moreover, the porous carbon used in the method for separating carbon dioxide may be obtained through the activation step described in connection with the method for producing porous carbon in FIG. 3.

The forming step S15 in the method for separating carbon dioxide is the same as the forming step S4 in the method for separating carbon dioxide in FIG. 2. Furthermore, the contacting step S16 in the method for separating carbon dioxide is the same as the contacting step S5 in the method for separating carbon dioxide in FIG. 2.

Since the porous carbon obtained by the method for producing porous carbon is used in the method for separating carbon dioxide, carbon dioxide can be easily and inexpensively separated.

### Other Embodiments

The above embodiments do not limit the configuration of the present invention. Therefore, in the above embodiments, the components of each part of the above embodiments can be omitted, replaced, or added based on the description in the present specification and general technical knowledge, and such omission, replacement, or addition should be construed as falling within the scope of the present invention.

In the second embodiment, the configuration in which the second pulverization step is performed before the solid-phase carbonization step has been described. However, in the case in which the method for producing porous carbon includes the second pulverization step, the position of the second pulverization step is not particularly limited. For example, the method for producing porous carbon may be configured such that the second pulverization step is performed after the solid-phase carbonization step. By performing the second pulverization step after the solid-phase carbonization step, the gas adsorption rate of the resulting porous carbon can be increased. It is to be noted that the method for producing porous carbon may be configured to include still another pulverization step in addition to the first pulverization step and the second pulverization step.

### [EXAMPLES]

Hereinafter, the present invention will be described in detail based on Examples. The present invention should not be construed in a limited way based on the description in the Examples.

### Examples

### No. 1

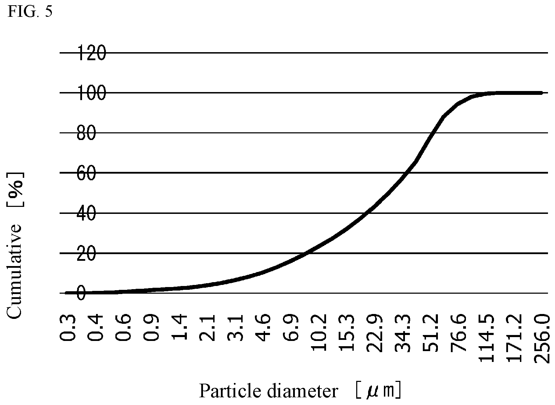

Porous carbon was produced using a commercially available petroleum pitch (softening point: 200 °C) as a graphitizable carbon material. Firstly, the petroleum pitch was pulverized in an agate mortar to have an average particle diameter of less than or equal to 150 µm (first pulverization step). The average particle diameter (D50) of the petroleum pitch after the first pulverization step was measured by laser diffraction to give an average particle diameter of 22.2 µm. FIG. 5 shows a cumulative curve of the particle diameter distribution of the petroleum pitch. Next, the petroleum pitch pulverized in the first pulverization step was heated in air to 300 °C at a heating rate of 1 °C/min and maintained at 300 °C for 1 hour to be infusibilized (infusibilization step). Subsequently, the petroleum pitch infusibilized in the infusibilization step was subjected to solid-phase carbonization by being heated to 900 °C at a heating rate of 3 °C/min in a nitrogen atmosphere and maintained at 900 °C for 0.5 hours (solid-phase carbonization step).

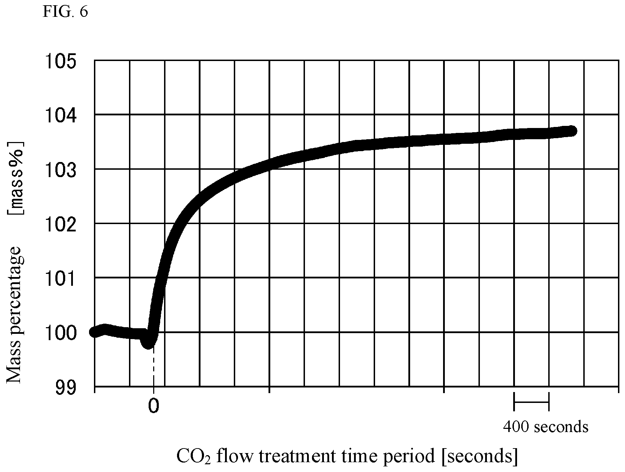

With regard to the porous carbon obtained by the solid-phase carbonization step, the carbon dioxide adsorption process in a 100% carbon dioxide atmosphere at 30 °C and 100 kPa was measured by a gravimetric method; as a result, the amount of carbon dioxide adsorbed was greater than or equal to 3 parts by mass (3.7 parts by mass) with respect to 100 parts by mass of the porous carbon. FIG. 6 shows the relation between the treatment time period and the amount of carbon dioxide adsorbed for the porous carbon in this measurement. It is to be noted that FIG. 6 shows values measured using 20 mg of the porous carbon. In FIG. 6, the vertical axis represents a weight change with the initial weight taken as 100%, and the difference from 100 indicates the amount of CO₂ adsorbed. No correction was made for buoyancy changes caused by gas switching. Furthermore, in FIG. 6, the end point of the arch-shaped curve in which the mass of the porous carbon increases beyond 100% corresponds to the adsorption start point (0 second) of carbon dioxide.

On the other hand, with regard to the same porous carbon, the amount of nitrogen adsorbed in a 100% nitrogen atmosphere at 30 °C and 100 kPa was measured in the same manner as above by a gravimetric method; the results show that the amount of nitrogen adsorbed was 0.5 parts by mass with respect to 100 parts by mass of the porous carbon.

The porous carbon produced in No. 1 exhibited a significantly greater adsorption amount of carbon dioxide than that of nitrogen gas. Accordingly, it can be said that the porous carbon produced by the method for producing porous carbon of the present disclosure has abundant ultramicropores and is suitable for use in a method for separating carbon dioxide. It is to be noted that in this example, the porous carbon was produced through the infusibilization step and the solid-phase carbonization step; although shrinkage and/or partial aggregation due to carbonization may occur during the solid-phase carbonization step, the primary particle diameter of the porous carbon can be approximated as being equal to the particle diameter of the petroleum pitch after the first pulverization step.

### Study based on No. 1

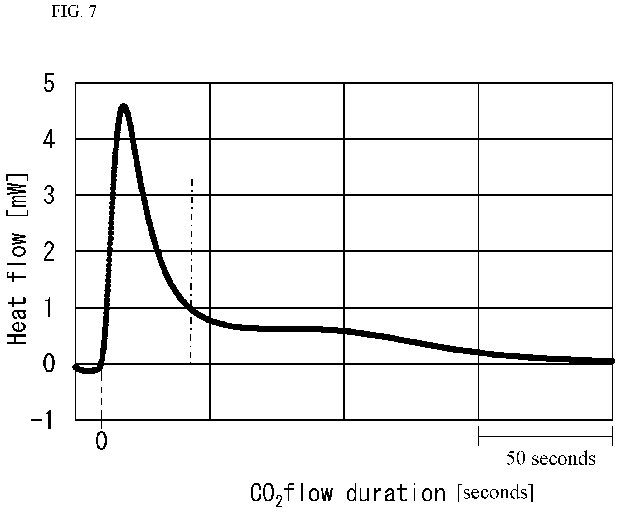

The present inventors intensively studied the porous carbon of No. 1 to further increase the carbon dioxide adsorption efficiency. Firstly, to investigate the carbon dioxide adsorption process in greater detail, a heat generation process due to adsorption of carbon dioxide was measured with a differential scanning calorimeter (DSC) by using 10 mg of the porous carbon of No. 1. The measurement results are shown in FIG. 7.

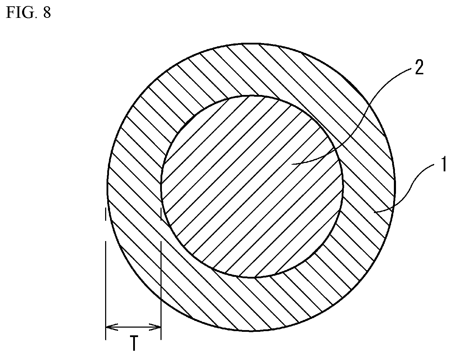

As shown in FIG. 7, it can be found that exothermic peaks of the porous carbon of No. 1 have two components: a fast-adsorbing component that ends within one minute after the adsorption start; and a slow-adsorbing component that continues to tail even after ten minutes from the adsorption start. It is presumable from this result that the porous carbon of No. 1 include, as shown in FIG. 8, an outer layer 1 in which adsorption is completed at a relatively early stage and an inner layer 2 located inside the outer layer 1 and having a lower adsorption rate. Furthermore, the ratio of the fast-adsorbing component to the slow-adsorbing component was determined from the integral values of the graph in FIG. 7 to give fast component : slow component = 60.1 : 39.9.

Based on the above presumption, it is considered effective to increase the proportion (volume fraction) of the outer layer 1 in the porous carbon in order to produce porous carbon having higher adsorption efficiency. Theoretically, it is presumable that the carbon dioxide adsorption efficiency can be effectively increased by controlling the particle diameter of the porous carbon to less than or equal to twice the thickness T of the outer layer 1.

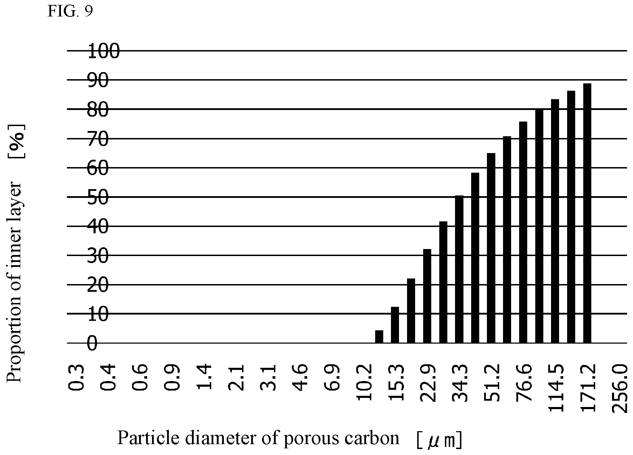

Based on this presumption, the thickness T of the outer layer 1 at which the proportion of the outer layer 1 was 60.1% was determined by a trial-and-error approach using the cumulative curve of the particle diameter distribution in FIG. 5 under the assumptions that: (1) the thickness of the outer layer 1 is constant regardless of the particle diameter of the porous carbon; and (2) the porous carbon particles are perfect spheres. As a result, T was calculated to be approximately 5.0 µm. FIG. 9 shows the relation between the proportion (volume fraction) of the inner layer 2 and the particle diameter of the porous carbon based on this calculation result.

### Study Results

As a result of the above study, it is presumed that in light of the carbon dioxide adsorption efficiency, the particle diameter of the porous carbon is preferably less than or equal to 10 µm. Furthermore, based on FIG. 9, the proportion of the inner layer 2 is estimated to be approximately 20% even when the particle diameter of the porous carbon is 20 µm; therefore, it is presumed that a configuration with a particle diameter of less than or equal to 20 µm has a sufficiently high carbon dioxide adsorption efficiency.

### No. 2

Based on the above study results, porous carbon was produced using the same petroleum pitch as in No. 1 as a graphitizable carbon material. Firstly, the petroleum pitch was cryogenically pulverized. The average particle diameter of the petroleum pitch after the pulverization was 1.7 µm (first pulverization step). It is to be noted that in the petroleum pitch, the proportion of particles having particle diameters of less than or equal to 10 µm after the pulverization in the first pulverization step was greater than or equal to 90%. The petroleum pitch after the pulverization in the first pulverization step was subjected to the infusibilization step and the solid-phase carbonization step by the same procedure as in No. 1 to produce porous carbon.

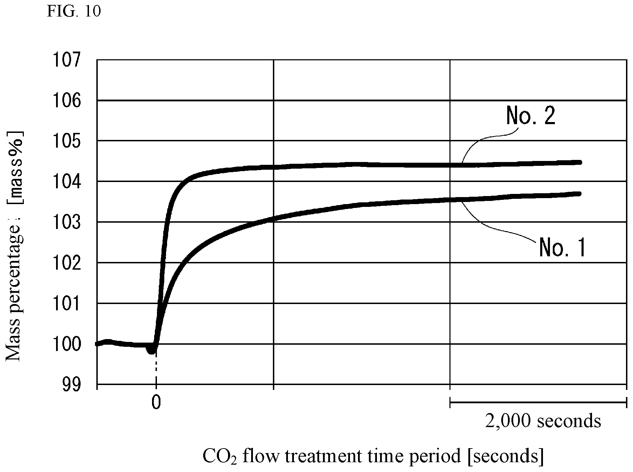

With regard to the porous carbon of No. 2, the carbon dioxide adsorption process in a 100% carbon dioxide atmosphere at 30 °C and 100 kPa was measured by a gravimetric method using a thermogravimetric analyzer. FIG. 10 shows the relation between the treatment time period and the amount of carbon dioxide adsorbed for the porous carbon in this measurement. It is to be noted that FIG. 10 shows values measured using 20 mg of the porous carbon. In FIG. 10, the vertical axis represents a weight change with the initial weight taken as 100%, and the difference from 100 indicates the CO₂ adsorption amount. No correction was made for buoyancy changes caused by gas switching. Furthermore, in FIG. 10, the end point of the arch-shaped curve in which the mass of the porous carbon increases beyond 100% corresponds to the adsorption start point (0 second) of carbon dioxide. FIG. 10 also shows the relation between the treatment time period and the amount of carbon dioxide adsorbed for the porous carbon of No. 1.

As shown in FIG. 10, the porous carbon of No. 2 exhibited improvements in both the amount of carbon dioxide adsorbed and the adsorption rate as compared with the porous carbon of No. 1. For example, the amount of carbon dioxide adsorbed by the porous carbon of No. 2 in a 100% carbon dioxide atmosphere at 30 °C and 100 kPa is greater than or equal to 4 parts by mass with respect to 100 parts by mass of the porous carbon.

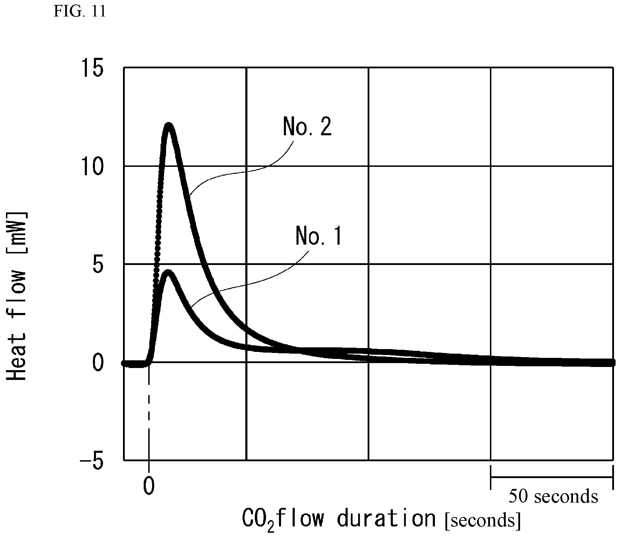

Furthermore, FIG. 11 shows the results obtained by measuring, using 10 mg of the porous carbon of No. 2, a heat generation process due to adsorption of carbon dioxide with a differential scanning calorimeter (DSC). It is to be noted that FIG. 11 also shows the heat generation process due to adsorption of carbon dioxide by the porous carbon of No. 1. As shown in FIG. 11, it can be found that in No. 2, the slow-adsorbing component that continues to tail even after ten minutes from the adsorption start disappears, and the proportion of the fast-adsorbing component becomes extremely high.

### No. 3

Porous carbon was produced using, as a graphitizable carbon material, ashless coal prepared from bituminous coal. Firstly, the ashless coal was cryogenically pulverized. The average particle diameter of the ashless coal after the pulverization was 2.1 µm (first pulverization step). The ashless coal pulverized in the first pulverization step was subjected to the infusibilization step and the solid-phase carbonization step by the same procedure as in No. 1 to produce porous carbon.

With regard to the porous carbon of No. 3, the carbon dioxide adsorption process in a 100% carbon dioxide atmosphere at 30 °C and 100 kPa was measured by a gravimetric method; as a result, the amount of carbon dioxide adsorbed was 9.2 parts by mass with respect to 100 parts by mass of the porous carbon. Furthermore, the carbon dioxide adsorption rate was substantially the same as that of the porous carbon of No. 2.

### No. 4

Porous carbon was produced using, as a graphitizable carbon material, ashless coal prepared from bituminous coal. Firstly, the ashless coal was cryogenically pulverized. Although the average particle diameter of the ashless coal after the pulverization was not measured, the average particle diameter was presumed to be approximately 2 µm because the ashless coal was cryogenically pulverized in the same manner as in No. 3 (first pulverization step). The ashless coal pulverized in the first pulverization step was subjected to the infusibilization step and the solid-phase carbonization step by the same procedure as in No. 1 to produce porous carbon.

With regard to the porous carbon of No. 4, the carbon dioxide adsorption process in a 100% carbon dioxide atmosphere at 30 °C and 100 kPa was measured by a gravimetric method; as a result, the amount of carbon dioxide adsorbed was 7.6 parts by mass with respect to 100 parts by mass of the porous carbon. Furthermore, the carbon dioxide adsorption rate was substantially the same as that of the porous carbon of No. 2.

Moreover, with regard to the porous carbon of No. 4, 0.01 g of a sample was vacuum-heated at 250 °C for 3 hours. Thereafter, a nitrogen adsorption isotherm up to 100 kPa at 25 °C was measured with "Belsorp-mini", manufactured by MicrotracBEL Corp., at a sample amount of 0.01 g; as a result, no adsorption isotherm could be obtained. Accordingly, it is considered that the porous carbon of No. 4 has superior carbon dioxide / nitrogen adsorption selectivity and is suitable for separating carbon dioxide from a combustion exhaust gas.

### No. 5

The porous carbon after the solid-phase carbonization step in No. 1 was further pulverized (second pulverization step), and the porous carbon after the second pulverization step was obtained as porous carbon of No. 5. The average particle diameter (D50) of the porous carbon of No. 5 was measured by laser diffraction to give 1.8 µm.

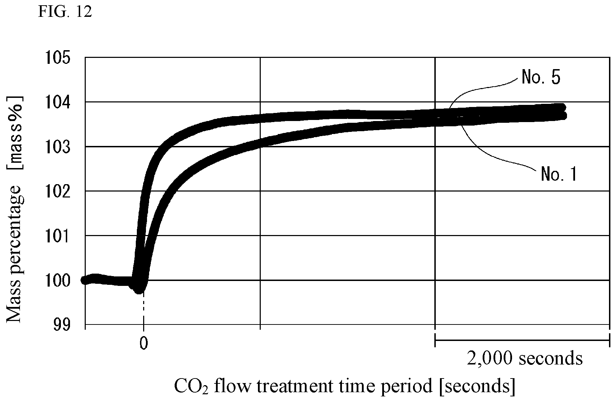

With regard to the porous carbon of No. 5, the carbon dioxide adsorption process in a 100% carbon dioxide atmosphere at 30 °C and 100 kPa was measured by a gravimetric method. FIG. 12 shows the relation between the treatment time period and the amount of carbon dioxide adsorbed for the porous carbon in this measurement. It is to be noted that FIG. 12 shows values measured using 20 mg of the porous carbon. In FIG. 12, the vertical axis represents a weight change with the initial weight taken as 100%, and the difference from 100 indicates the CO₂ adsorption amount. No correction was made for buoyancy changes caused by gas switching. Furthermore, in FIG. 12, the end point of the arch-shaped curve in which the mass of the porous carbon increases beyond 100% corresponds to the adsorption start point (0 second) of carbon dioxide. FIG. 12 also shows the relation between the treatment time period and the amount of carbon dioxide adsorbed for the porous carbon of No. 1.

As shown in FIG. 12, the porous carbon of No. 5 exhibited an improved carbon dioxide adsorption rate as compared with the porous carbon of No. 1 by virtue of the second pulverization step. Furthermore, the porous carbon of No. 5 exhibited a slight improvement in the amount of carbon dioxide adsorbed as compared with the porous carbon of No. 1 by virtue of the second pulverization step. It is to be noted that the porous carbon of No. 5 is inferior to the porous carbon of No. 2 in both the amount of carbon dioxide adsorbed and the adsorption rate. Accordingly, in the present disclosure, in light of the amount of carbon dioxide adsorbed and the adsorption rate, it is considered more preferable to promote micronization of the graphitizable carbon material in the first pulverization step before the infusibilization step.

### Comparative Example

### No. 6

Porous carbon was produced using coal-tar pitch as a graphitizable carbon material by performing the infusibilization step and the solid-phase carbonization step by the same procedure as in No. 1. No. 6 was different from No. 1 and No. 5 in that neither the first pulverization step nor the second pulverization step was performed. The carbon obtained in No. 6 had particle diameters within a range of greater than or equal to 200 µm and less than or equal to 800 µm. The amount of carbon dioxide adsorbed by this carbon in a 100% carbon dioxide atmosphere at 30 °C and 100 kPa was measured and found to be below the measurement limit.

### Evaluation Results

When pitches, which are graphitizable carbon materials, are carbonized as they are, liquid-phase carbonization proceeds and a stacked structure of polycyclic aromatic compounds develops, making the formation of ultramicropores difficult. On the other hand, when the graphitizable carbon material is subjected to solid-phase carbonization after infusibilization, a large number of ultramicropores are formed. Although the reason why a large number of ultramicropores are formed is not clear, a plurality of factors can be presumed: for example, the presence and retention of intermolecular voids due to an isotropic molecule orientation of the raw material; the generation and retention of intermolecular voids resulting from inhibition of stacking formation by the formation of oxygen bridges during infusibilization; and the generation of voids by the generation and release of low-molecular-weight gases during carbonization. Furthermore, it was found that by appropriately controlling the particle diameter of such porous carbon before the solid-phase carbonization, the proportion of the above-described outer layer in the porous carbon can be increased, whereby the amount of carbon dioxide adsorbed and the adsorption rate can be improved. Moreover, according to the present disclosure, it was found that possible to control the pore diameter of the ultramicropores to obtain favorable carbon dioxide / nitrogen separation properties, which enables efficiently separating carbon dioxide from a combustion exhaust gas. Therefore, it can be said that the method for producing porous carbon of the present disclosure is effective as a measure against global warming.

### [EXPLANATION OF THE REFERENCE SYMBOLS]

- 1: Outer layer
- 2: Inner layer
- T: Thickness of outer layer

## Claims

1. A method for producing porous carbon, the method comprising:
a first pulverization step of pulverizing a graphitizable carbon material;
an infusibilization step of infusibilizing the graphitizable carbon material pulverized in the first pulverization step; and
a solid-phase carbonization step of subjecting, to solid-phase carbonization, the graphitizable carbon material infusibilized in the infusibilization step.

2. The method for producing porous carbon according to claim 1, the method further comprising a second pulverization step of pulverizing the graphitizable carbon material after the infusibilization step.

3. The method for producing porous carbon according to claim 2, wherein the second pulverization step is performed prior to the solid-phase carbonization step.

4. The method for producing porous carbon according to any one of claims 1 to 3, wherein an average particle diameter of the graphitizable carbon material in the solid-phase carbonization step is less than or equal to 20 µm.

5. The method for producing porous carbon according to any one of claims 1 to 3, wherein in the first pulverization step, the graphitizable carbon material is pulverized to have an average particle diameter of less than or equal to 20 µm.

6. The method for producing porous carbon according to any one of claims 1 to 3, wherein in a 100% carbon dioxide atmosphere at 30 °C and 100 kPa, an amount of carbon dioxide adsorbed by the porous carbon is greater than or equal to 4 parts by mass with respect to 100 parts by mass of the porous carbon.

7. The method for producing porous carbon according to any one of claims 1 to 3, wherein the porous carbon is a carbon dioxide separating material.

8. A method for separating carbon dioxide, the method comprising a step of bringing a gas containing carbon dioxide into contact with porous carbon produced by the method for producing porous carbon according to any one of claims 1 to 3.

9. The method for separating carbon dioxide according to claim 8, wherein the gas is a combustion exhaust gas generated when a material comprising carbon is combusted.
